# EUROPEAN PATENT SPECIFICATION

(11) **EP 3 674 644 B1**
(45) Date of publication and mention of the grant of the patent: **07.06.2023**
(21) Application number: 19217852.3
(22) Date of filing: 19.12.2019
(51) Int. Cl.: F25J 3/04, F28F 9/10

(54) **HEAT EXCHANGER ASSEMBLY AND METHOD FOR ASSEMBLING SAME**
WÄRMETAUSCHERANORDNUNG UND VERFAHREN ZUR MONTAGE DAVON
ENSEMBLE ÉCHANGEUR DE CHALEUR ET SON PROCÉDÉ D'ASSEMBLAGE

(30) Priority: 28.12.2018 CN 201811626459
(43) Date of publication of application: 01.07.2020
(73) Proprietor: L'Air Liquide, société anonyme pour l'Étude et l'Exploitation des procédés Georges Claude, 75007 Paris (FR)
(72) Inventor: KURTZ, Rémy, 31-545 Krakow (PL)
(74) Representative: Air Liquide

(56) References cited:
- WO-A1-2013/102715
- US-A- 5 461 871
- US-A- 6 148 637
- US-A1- 2015 096 327

## Description

The present invention relates to a heat exchanger assembly and a method for assembling the heat exchanger assembly, in particular to a method which facilitates the on-site connection of heat exchanger cold boxes.

Air separation requires air to be cooled to a very low temperature. In order to prevent heat exchange with the outside and reduce cold loss, cryogenic containers such as cryogenic heat exchangers and distillation columns are always placed in a cold box, which is packed with a thermally isolating material with low thermal conductivity.

In US2015/0096327, by means of a specific conduit box, prefabrication thereof separately from a column cold box is achieved, and some conduits and valves which were originally in the column cold box are disposed in the conduit box; in this way, the dimensions of the column cold box can be reduced. The conduit box comprises multiple fluid pipelines, control lines and air lines used for all the meters; electric cables etc. may also be connected in a factory. The conduit box is transported to an installation site, hoisted using a crane, then connected to the column cold box via conduit connection ends, realizing the interconnection of fluid pipelines, meter air pipelines, control lines and electric cables. In this situation, due to the complex interconnection of conduit connection ends between the conduit box and the other cold box, and the need to use a crane for on-site hoisting of the conduit box, the on-site workload associated with connecting the conduit connection ends and crane hoisting is also correspondingly increased.

US-A-6148637 discloses an air separation unit where two distillation columns are each disposed in a separate cold box with a heat exchanger for cooling the feed air to one of the columns between the two column cold boxes. The means for insulating the conduits between the cold boxes is not disclosed.

US-A-5461871 discloses a cold box containing the main heat exchange line and a subcooler. The means for insulating the conduits between the cold boxes is not disclosed.

In order to solve the abovementioned technical problem, a heat exchanger assembly and a method for assembling the heat exchanger assembly are disclosed in the present invention. Through the assembly and method, the connection of pipelines between a high-pressure heat exchanger cold box, a low-pressure heat exchanger cold box and a subcooler cold box can be completed at the site; due to the fact that the number of pipelines needing to be connected at the site is limited, and the fact that it is only necessary to assemble a thermally isolating casing around connection components and pack this with a thermally isolating material, it is possible to use a simple tool such as a forklift truck instead of a crane to perform the work of connecting the pipelines and hoisting the thermally isolating casings, so the on-site workload is greatly reduced.

According to the present invention, there is provided a heat exchanger assembly according to Claim 1.

Preferably, the first heat exchanger cold box, the second heat exchanger cold box and the subcooler cold box are all installed on the ground.

Preferably, the first heat exchanger and the second heat exchanger form a main heat exchanger in cryogenic air separation equipment.

Preferably, the first group and third group of pipelines, and the second group and fourth group of pipelines, are connected by means of connection components.

Preferably, the connection components comprise a pipeline and/or a flange.

Preferably, the third opening and the fourth opening are on two oppositely disposed sides of the subcooler cold box.

Preferably, the third opening and the fourth opening are on the same side of the subcooler cold box.

Preferably, the third opening and the fourth opening are on two adjacently disposed sides of the subcooler cold box.

Also disclosed in the present invention is a method for assembling the heat exchanger assembly, comprising the following steps: manufacturing the first heat exchanger cold box, the second heat exchanger cold box and the subcooler cold box in a workshop, and transporting same to a site, wherein: the first group of pipelines and the third group of pipelines are connected at the site, a first sealing panel and a third sealing panel are installed on the first opening and the third opening, and the pipelines and connection components are encapsulated in the first thermally isolating casing by installing a casing outside the pipelines and connection components and packing with a thermally isolating material; the second group of pipelines and the fourth group of pipelines are connected, a second sealing panel and a fourth sealing panel are installed on the second opening and the fourth opening, and the pipelines and connection components are encapsulated in the second thermally isolating casing by installing a casing outside the pipelines and connection components and packing with a thermally isolating material.

Preferably, the thermally isolating casings are connected to the sealing panels by welding.

The present invention has the following beneficial effects relative to the prior art:
1. Compared with the conduit box solution, the number of pipelines which need to be connected at the site in the present invention is much smaller than the number of conduit connection ends, such that the work involved in connecting pipelines between the main heat exchanger cold boxes and the subcooler cold box is much simpler.
2. In the present invention, a forklift truck is all that is needed to perform the work of connecting pipelines and hoisting the thermally isolating casings; thus the cost of using a crane is saved, the on-site workload is reduced, and the complexity of hoisting at the site is also reduced.
3. In the present invention, the cold boxes can be arranged rationally according to site conditions at the site, such that the site utilization rate is maximized.

Fig. 1 shows an embodiment of assembly of the heat exchanger assembly in the present invention. Fig. 2 shows another embodiment of assembly of the heat exchanger assembly in the present invention.

Fig. 3 shows another embodiment of assembly of the heat exchanger assembly in the present invention.

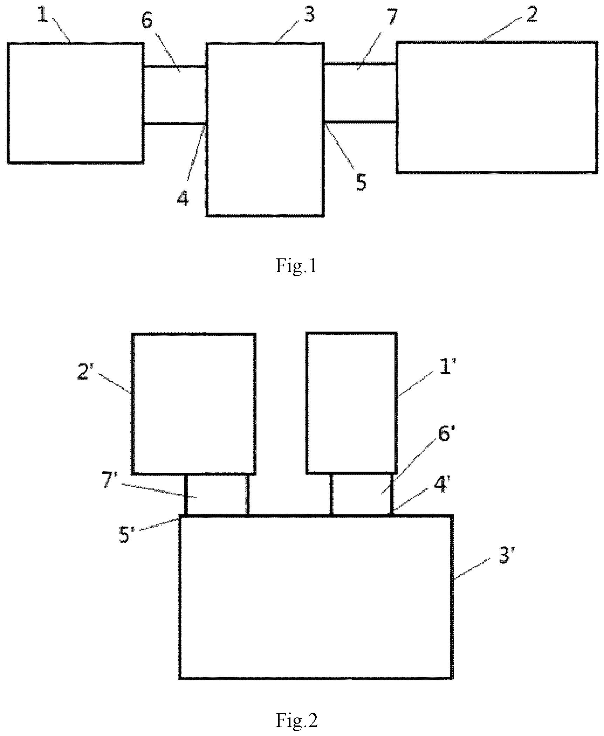

Preferred embodiments of the present invention are described further below with reference to figs. 1-3, which are in general schematic and, for the sake of clarity, not drawn to scale.

A main heat exchanger is used to cool feed air for cryogenic air separation by performing indirect heat exchange with return fluid from a distillation column system. The distillation column system comprises a two-column system for oxygen/nitrogen separation, the two-column system having a high-pressure column and a low-pressure column, with a main condenser-evaporator between the high-pressure column and the low-pressure column, the function thereof being to cause gas from the column top of the high-pressure column to be liquefied by column-bottom liquid of the low-pressure column, with the column-bottom liquid of the low-pressure column being evaporated. The two columns having different operating pressures not only produce gaseous products containing oxygen and nitrogen, but also produce liquid products. These liquids may be drawn out of the air separation equipment as final liquid products, or be internally compressed (pressurized in a pump to a high pressure and reheated in the main heat exchanger), and can thereby be used as gaseous pressure products. Besides the two columns used for the separation of nitrogen and oxygen, the distillation column system may also have other equipment, for example for obtaining other air components, e.g. argon acquisition equipment or krypton/xenon acquisition equipment, wherein the argon acquisition equipment comprises at least one crude argon column. As stated above, the feed air for cryogenic air separation comprises a main feed air stream, which has been compressed in a main air compressor to higher than the operating pressure of the distillation column system and then precooled and purified; a pressurized feed air stream wherein a portion of the main feed air stream has been further compressed in an air pressurizer to a higher pressure; and a high-pressure feed air stream resulting from a portion of the pressurized feed air stream being further compressed in a pressurization end coupled to air expansion. The return fluid from the distillation column system, which return fluid is used to cool these air feeds, comprises a low-pressure nitrogen product and waste nitrogen gas drawn out from the top of the low-pressure column; medium-pressure liquid nitrogen resulting from the pressurization, in a liquid nitrogen pump, of a liquid nitrogen product drawn out from the top of the high-pressure column; and high-pressure liquid oxygen resulting from the pressurization, in a liquid oxygen pump, of a liquid oxygen product drawn out from the main condenser-evaporator of the distillation column.

The heat exchanger assembly in the present invention comprises a main heat exchanger system, the main heat exchanger system being formed of a first heat exchanger and a second heat exchanger, the first heat exchanger and second heat exchanger being used for processing fluids which are at a high pressure and a low pressure respectively; design pressures of the heat exchangers are defined according to the highest value amongst the pressures of all fluids passing through the heat exchangers. With regard to the high-pressure heat exchanger, the pressure of the high-pressure liquid oxygen resulting from the pressurization, in the liquid oxygen pump, of the liquid oxygen product drawn out from the main condenser-evaporator of the distillation column may reach 30 - 50 kg, which is higher than the pressures of all other fluids entering the high-pressure heat exchanger to undergo heat exchange; thus the design pressure of the high-pressure heat exchanger is determined by the pressure of the high-pressure liquid oxygen. With regard to the low-pressure heat exchanger, if the pressure of the main feed air stream is higher than the pressures of all other fluids entering the low-pressure heat exchanger to undergo heat exchange, then the design pressure of the low-pressure heat exchanger is determined by the pressure of the main feed air stream, and may reach 5 - 6.5 kg; if the liquid nitrogen product needs to be drawn out from the top of the high-pressure column and pressurized to 10 - 20 kg in the liquid nitrogen pump, in which case the medium-pressure liquid nitrogen is at a higher pressure than all other fluids entering the low-pressure heat exchanger to undergo heat exchange, then the design pressure of the low-pressure heat exchanger is determined by the pressure of the medium-pressure liquid nitrogen; thus, the design pressure of the low-pressure heat exchanger may reach 6.5 - 20 kg.

Plate-fin heat exchangers are widely used in cryogenic air separation. Plate-fin heat exchangers are generally made of an aluminum alloy, because aluminum has high thermal conductivity, low density, and mechanical properties which are enhanced in low-temperature conditions. The first heat exchanger and second heat exchanger in the present invention are both plate-fin heat exchangers.

Generally, a number of identical heat exchanger units are used and arranged to form the main heat exchanger; each heat exchanger unit is an identical cuboid having substantially identical dimensions. In the present invention, multiple high-pressure heat exchanger units connected in parallel and/or in series form the high-pressure heat exchanger, and multiple low-pressure heat exchanger units connected in parallel and/or in series form the low-pressure heat exchanger; due to the fact that the operating pressures and fluids passing through are different, it can be concluded that the high-pressure heat exchanger units and low-pressure heat exchanger units are of different designs. In principle, each heat exchanger unit in the high-pressure heat exchanger carries out the same function, each heat exchanger unit is passed through by the same number of fluid pipelines, and these are cooled or heated to substantially the same temperature; it is thereby possible to attain a greater heat exchange function. By the same principle, each heat exchanger unit in the low-pressure heat exchanger carries out the same function.

The heat exchanger assembly in the present invention also comprises a subcooler; the subcooler is a heat exchanger that is separate from the main heat exchanger and formed by one or more heat exchanger units, and is also a plate-fin heat exchanger. It uses one or more cold-state fluids from the low-pressure column to cool one or more fluids from the high-pressure column, and these cold-state fluids return and, via the main heat exchanger, further cool a hot fluid such as feed air entering the main heat exchanger. In any embodiment of the present invention, the subcooler only has one heat exchanger unit.

The high-pressure heat exchanger and the low-pressure heat exchanger both have a fluid pipeline connection with the subcooler. For example: at least a portion of waste nitrogen gas drawn out from the top of the low-pressure column cools, cools an oxygen-rich liquid from the bottom of the high-pressure column in the subcooler, and then enters the high-pressure heat exchanger to be used for cooling the pressurized feed air stream and the high-pressure feed air stream. The low-pressure nitrogen product and another portion of waste nitrogen gas drawn out from the top of the low-pressure column flow through the subcooler and enter the low-pressure heat exchanger to be used for cooling the main feed air stream. The high-pressure heat exchanger and low-pressure heat exchanger are independent of each other, with no fluid pipeline connection therebetween.

A basic structure of the plate-fin heat exchanger unit is a unit body stacked structure composed of five elements, namely fins, flow-guiding plates, separating plates, side plates and sealing strips. Fins, flow-guiding plates and sealing strips are placed between two adjacent separating plates to form an interlayer, called a channel, and interlayers of this kind are stacked according to different fluid forms, and brazed to form an integral plate bundle; the plate bundle is the core of the plate-fin heat exchanger, and is combined with necessary sealing heads, pipelines and supports, etc. to form the plate-fin heat exchanger unit. The dimension in the direction of channel stacking is defined as the height of the heat exchanger unit; the dimension in the direction of flow of fluid in the channels is defined as the length of the heat exchanger unit.

For the high-pressure heat exchanger and low-pressure heat exchanger formed of a number of heat exchanger units, pipelines comprise a main inlet pipe, distribution pipes, collection pipes and a main outlet pipe. For example, the main feed air stream to be cooled enters multiple distribution pipes via the main inlet pipe, and each distribution pipe sends a portion of the main feed air stream to one of the low-pressure heat exchanger units. Similarly, cooled fluid flows out from each heat exchanger unit through each single collection pipe; each collection pipe is connected to the main outlet pipe, which accommodates cooled fluid sent by the distribution pipes to each heat exchanger unit. The main inlet pipe, distribution pipes, collection pipes and main outlet pipe together form heat exchange fluid pipelines.

The heat exchanger units and heat exchange fluid pipelines directly connected to the heat exchanger units are all preferably made of an aluminum alloy resistant to low temperatures and high pressure, but may also be made of stainless steel, carbon steel or a combination of the abovementioned materials. The manufacture and connection of the heat exchanger units and heat exchange fluid pipelines are both completed in a special-purpose workshop (e.g. a manufacturing workshop of a supplier). Before exiting the factory, they are supported by a prefabricated steel structure, which is used as a support for transportation from the workshop to the site. If steel plates used as panels for enclosure and protection are installed on an outer surface of the prefabricated steel structure, a heat exchanger cold box is formed.

Depending on equipment dimensions, multiple main heat exchangers may be integrated in one cold box. For example, in relatively small cryogenic air separation equipment, the main heat exchanger and subcooler may be integrated in one cold box. In large air separation equipment, the high-pressure heat exchanger, low-pressure heat exchanger and subcooler are distributed in multiple cold boxes. In the present invention, the first heat exchanger and second heat exchanger are arranged in different cold boxes, called a first heat exchanger cold box and a second heat exchanger cold box respectively, i.e. a high-pressure heat exchanger cold box and a low-pressure heat exchanger cold box. The subcooler is accommodated in a different third cold box. Compared with the arrangement of an integrated heat exchanger cold box, the objective of separate transportation of cold boxes can be achieved. Furthermore, a larger heat exchanger volume can be designed within a permitted transportation dimension range, and it is thereby possible to achieve a greater heat exchange function.

In general, the shape of the heat exchanger cold boxes is a cuboid. After being transported to the site from the workshop, the first heat exchanger cold box, second heat exchanger cold box and subcooler are all installed on the ground, arranged with the length of the heat exchanger units being perpendicular to the ground. A cold box panel surface perpendicular to the ground is called a side, thus each heat exchanger cold box has four sides; a horizontal rectangular face of the covered and formed heat exchanger cold box is defined as a cross section of the cold box. Compared with the low-pressure heat exchanger, the high-pressure heat exchanger is designed to have a smaller cross-sectional area, because a heat exchanger with a higher pressure presents fewer choices regarding heat transfer fin type, and thicker design elements are needed, such as separating plates and side plates, hence the cross-sectional area of the high-pressure heat exchanger is preferably smaller than the cross-sectional area of the low-pressure heat exchanger. As stated above, besides the heat exchanger units, the heat exchange fluid pipelines are also accommodated in the heat exchanger cold boxes. Heat exchanger fluid entering the main heat exchanger comprises hot fluids and cold fluids; the hot fluids comprise the main feed air stream, the pressurized feed air stream and the high-pressure feed air stream, and the cold fluids comprise the low-pressure nitrogen product and waste nitrogen gas flowing through the subcooler, the medium-pressure liquid nitrogen and the high-pressure liquid oxygen. Generally, the hot fluid enters through a hot end of the main heat exchanger, and flows out through a cold end after being cooled; the cold fluid enters through the cold end of the main heat exchanger, and flows out through the hot end after being heated; the hot end is at an upper end of the heat exchanger unit, and correspondingly, the cold end is at a lower end of the heat exchanger unit.

At the cold end of the high-pressure heat exchanger, at least a portion of waste nitrogen gas drawn out from the top of the low-pressure column and the high-pressure liquid oxygen drawn out from the main condenser-evaporator and pressurized in the liquid oxygen pump, are led into a main inlet pipe for at least a portion of waste nitrogen gas and a main inlet pipe for high-pressure liquid oxygen, used for cooling the pressurized feed air stream and the high-pressure feed air stream. Before entering the high-pressure heat exchanger, these two main inlet pipes must pass through a first opening in a cold box side from outside the high-pressure heat exchanger cold box and enter the high-pressure heat exchanger cold box, then the two main inlet pipes are connected to different units of the high-pressure heat exchanger via multiple distribution pipes respectively, such that the two cold fluids are equally distributed into different units of the high-pressure heat exchanger. At least a portion of waste nitrogen gas flows through the subcooler, then the fluid pipeline passes through a third opening in a subcooler cold box side, and is connected to the main inlet pipe for at least a portion of waste nitrogen gas at the first opening of the high-pressure heat exchanger cold box. A fluid pipeline for high-pressure liquid oxygen passes through the subcooler cold box, but does not flow through the subcooler, then passes out through the third opening in the subcooler cold box side, and is connected to the main inlet pipe for high-pressure liquid oxygen at the first opening of the high-pressure heat exchanger cold box.

At the hot end of the high-pressure heat exchanger, the pressurized feed air stream and high-pressure feed air stream are led into a main inlet pipe for the pressurized feed air stream and a main inlet pipe for the high-pressure feed air stream, and after undergoing reverse heat exchange with at least a portion of waste nitrogen gas and high-pressure liquid oxygen, at the cold end of the high-pressure heat exchanger, the cooled pressurized feed air stream and high-pressure feed air stream are connected from different units of the high-pressure heat exchanger to a main outlet pipe for the cooled pressurized feed air stream and a main outlet pipe for the cooled high-pressure feed air stream via multiple collection pipes respectively; these two main outlet pipes must pass out of the first opening in the cold box side from inside the high-pressure heat exchanger cold box. The main outlet pipe for the cooled pressurized feed air stream must pass out of the first opening in the high-pressure heat exchanger cold box side, then enters the subcooler cold box through the third opening in the subcooler cold box side, but does not flow through the subcooler, then enters a gas expander (about 10% of the cooled pressurized feed air stream is liquid air). The main outlet pipe for the cooled high-pressure feed air stream must also pass out of the first opening in the high-pressure heat exchanger cold box side, then enters the subcooler cold box through the third opening in the subcooler cold box side, but does not flow through the subcooler, then enters a liquid expander.

At the cold end of the low-pressure heat exchanger, the low-pressure nitrogen product and another portion of waste nitrogen gas drawn out from the top of the low-pressure column, which are used for cooling the main feed air stream, are led into a main inlet pipe for the low-pressure nitrogen product and a main inlet pipe for another portion of waste nitrogen gas. Before entering the low-pressure heat exchanger, these two main inlet pipes must pass through a second opening in a cold box side from outside the low-pressure heat exchanger cold box and enter the low-pressure heat exchanger cold box, then the two main inlet pipes are connected to different units of the low-pressure heat exchanger via multiple distribution pipes respectively, such that the two cold fluids are equally distributed into different units of the low-pressure heat exchanger. The medium-pressure liquid nitrogen, which has been drawn out from the top of the high-pressure column and pressurized in the liquid nitrogen pump, is also led into a main inlet pipe for medium-pressure liquid nitrogen at the cold end of the low-pressure heat exchanger. By the same principle, before entering the low-pressure heat exchanger, the main inlet pipe for medium-pressure liquid nitrogen must also pass through the second opening in the cold box side from outside the low-pressure heat exchanger cold box and enter the low-pressure heat exchanger cold box, then the main inlet pipe for medium-pressure liquid nitrogen is connected to different units of the low-pressure heat exchanger via multiple distribution pipes, such that the medium-pressure liquid nitrogen is equally distributed into different units of the low-pressure heat exchanger. The low-pressure nitrogen product and the other portion of waste nitrogen gas flow through the subcooler, then the two fluid pipelines pass through a fourth opening in a subcooler cold box side, and are connected to the main inlet pipe for the low-pressure nitrogen product and the main inlet pipe for another portion of waste nitrogen gas at the second opening of the low-pressure heat exchanger cold box respectively. A fluid pipeline for medium-pressure liquid nitrogen passes through the subcooler cold box, but does not flow through the subcooler, then passes out through the fourth opening in the subcooler cold box side, and is connected to the main inlet pipe for medium-pressure liquid nitrogen at the second opening of the low-pressure heat exchanger cold box.

At the hot end of the low-pressure heat exchanger, the main feed air stream is led into a main inlet pipe for the main feed air stream, and after undergoing reverse heat exchange with the low-pressure nitrogen product and the other portion of waste nitrogen gas as well as the medium-pressure liquid nitrogen, at the cold end of the low-pressure heat exchanger, the cooled main feed air stream is connected from different units of the low-pressure heat exchanger to a main outlet pipe for the cooled main feed air stream via multiple collection pipes; this main outlet pipe must pass out of the second opening in the cold box side from inside the low-pressure heat exchanger cold box, then enters the subcooler cold box through the fourth opening in the subcooler cold box side, but does not flow through the subcooler, then enters the low-pressure column.

All of the main outlet pipes and main inlet pipes of the high-pressure heat exchanger and low-pressure heat exchanger cold end are disposed at lower ends of the high-pressure heat exchanger cold box and the low-pressure heat exchanger cold box; correspondingly, the first opening in the high-pressure heat exchanger cold box side, the second opening in the low-pressure heat exchanger cold box side, and the third and fourth openings in the subcooler cold box side are also located at lower ends of their respective cold boxes; this facilitates the interconnection of heat exchange fluid pipelines at elevation positions close to the ground.

Furthermore, meter air pipelines pass through the third opening and fourth opening in the subcooler cold box side respectively, and are connected to the high-pressure heat exchanger cold box and low-pressure heat exchanger cold box, but do not flow through the high-pressure heat exchanger, the low-pressure heat exchanger or the subcooler.

Thus, a first group of pipelines in the present invention comprises the main inlet pipe for at least a portion of waste nitrogen gas and the main inlet pipe for high-pressure liquid oxygen which are led into the high-pressure heat exchanger cold box, the main outlet pipe for the cooled pressurized feed air stream and the main outlet pipe for the cooled high-pressure feed air stream, and a high-pressure meter air pipeline. The first group of pipelines pass through the first opening of the high-pressure heat exchanger cold box, and preferably have extensions to facilitate connection. A corresponding third group of pipelines pass through the third opening of the subcooler cold box, and preferably have extensions to facilitate connection. The extensions of the first group of pipelines and the third group of pipelines are welded to blind flanges in the workshop, to prevent rainwater and dust from entering the pipelines during transportation.

A second group of pipelines comprises the main inlet pipe for the low-pressure nitrogen product and the main inlet pipe for another portion of waste nitrogen gas which are led into the low-pressure heat exchanger, the main inlet pipe for medium-pressure liquid nitrogen that leads into the low-pressure heat exchanger, and the main outlet pipe for the cooled main feed air stream. The second group of pipelines pass through the second opening of the low-pressure heat exchanger cold box, and preferably have extensions to facilitate connection. A corresponding fourth group of pipelines pass through the fourth opening of the subcooler cold box, and preferably have extensions to facilitate connection. The extensions of the second group of pipelines and the fourth group of pipelines are welded to blind flanges in the workshop, to prevent rainwater and dust from entering the pipelines during transportation.

In respect of the pipelines included in the first group of pipelines, the second group of pipelines, the third group of pipelines and the fourth group of pipelines, the present invention is not limited to the preferred embodiments above. The abovementioned pipelines are not necessary; furthermore, it is also possible to include and have pipelines contained in other equipment for producing other air components.

The first group of pipelines passing through the first opening of the high-pressure heat exchanger cold box side are arranged adjacently as far as possible; this allows the high-pressure heat exchanger cold box to have fewer openings. By the same principle, the second group of pipelines passing through the second opening of the low-pressure heat exchanger cold box side are also arranged adjacently as far as possible.

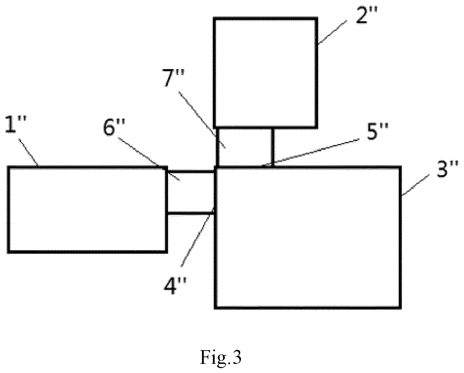

If the third opening and the fourth opening are on two oppositely disposed sides of the subcooler cold box, then the heat exchanger assembly is defined as being assembled in a linear arrangement; a particular embodiment will be expounded by means of fig. 1. If the third opening and the fourth opening are on the same side of the subcooler cold box, then the heat exchanger assembly is defined as being assembled in a U-shaped arrangement; a particular embodiment will be expounded by means of fig. 2. If the third opening and the fourth opening are on two adjacently disposed sides of the subcooler cold box, then the heat exchanger assembly is defined as being assembled in an L-shaped arrangement; a particular embodiment will be expounded by means of fig. 3. The linear arrangement, U-shaped arrangement and U-shaped arrangement serve as preferred embodiments, indicating that in the present invention, the various cold boxes can be arranged in the most rational manner and with a maximized site utilization rate according to site conditions.

After the high-pressure heat exchanger cold box, the low-pressure heat exchanger cold box and the subcooler cold box have been transported to the site, the blind flanges are removed. Then, the first group of pipelines and the third group of pipelines, and the second group of pipelines and the fourth group of pipelines, are correspondingly connected by means of connection components. The connection components of the high-pressure heat exchanger cold box and the subcooler cold box comprise straight pipes and/or curved pipes required according to the actual arrangement of pipelines, with two ends connected to the first group of pipelines and the third group of pipelines respectively; the connection may be a bolted flange connection, and may also be a welded connection. By the same principle, the connection components of the low-pressure heat exchanger cold box and the subcooler cold box comprise straight pipes and/or curved pipes required according to the actual arrangement of pipelines, with two ends connected to the second group of pipelines and the fourth group of pipelines respectively; the connection may be a bolted flange connection, and may also be a welded connection.

Then, sealing panels are installed at the openings of the high-pressure heat exchanger cold box, the low-pressure heat exchanger cold box and the subcooler cold box, such that the cold box becomes an airtight case, and the interior thereof is packed with a thermally isolating material, which is expanded perlite or rock wool. The extensions of the first group of pipelines outside the high-pressure heat exchanger cold box, the extensions of the third group of pipelines outside the subcooler cold box and the connection components therebetween are then encapsulated together in a first thermally isolating casing. The extensions of the second group of pipelines outside the low-pressure heat exchanger cold box, the extensions of the fourth group of pipelines outside the subcooler cold box and the connection components therebetween are encapsulated together in a second thermally isolating casing.

Preferably, the thermally isolating casing has a frame made from surrounding U-shaped profiles on four sides; these U-shaped profiles have two ends connected by welding to the abovementioned sealing panels, and can then sustain the load of the thermally isolating casing itself as well as forces which occur at the site; these forces may be caused by the wind or earthquakes. Generally, four joining plates of this kind form an airtight cuboid space, and the pipelines and connection components are encapsulated in the casing; the connection between one joining plate thereof and an adjacent joining plate may be accomplished by welding. Since the pipelines and connection components outside the cold boxes mentioned above must be kept cold, a hole is left in one joining plate to allow packing with a thermally isolating material.

Fig. 1 shows an embodiment of assembly of the heat exchanger assembly in the present invention. A first heat exchanger cold box 1 and a second heat exchanger cold box 2 are arranged at two opposite sides of a subcooler cold box 3. This means that a third opening 4 and a fourth opening 5 are on two oppositely disposed sides of the subcooler cold box. A thermally isolating casing 6 is disposed in a sealed manner between the first heat exchanger cold box 1 and the subcooler cold box 3. A thermally isolating casing 7 is disposed in a sealed manner between the second heat exchanger cold box 2 and the subcooler cold box 3. The heat exchanger assembly is assembled in a linear arrangement.

Fig. 2 shows another embodiment of assembly of the heat exchanger assembly in the present invention. A first heat exchanger cold box 1' and a second heat exchanger cold box 2' are arranged at the same side of a subcooler cold box 3'. This means that a third opening 4' and a fourth opening 5' are on the same side of the subcooler cold box. A thermally isolating casing 6' is disposed in a sealed manner between the first heat exchanger cold box 1' and the subcooler cold box 3'. A thermally isolating casing 7' is disposed in a sealed manner between the second heat exchanger cold box 2' and the subcooler cold box 3'. The heat exchanger assembly is assembled in a U-shaped arrangement.

Fig. 3 shows another embodiment of assembly of the heat exchanger assembly in the present invention. A first heat exchanger cold box 1" and a second heat exchanger cold box 2" are arranged at two adjacent sides of a subcooler cold box 3". This means that a third opening 4" and a fourth opening 5" are on two adjacently disposed sides of the subcooler cold box. A thermally isolating casing 6" is disposed in a sealed manner between the first heat exchanger cold box 1" and the subcooler cold box 3". A thermally isolating casing 7" is disposed in a sealed manner between the second heat exchanger cold box 2" and the subcooler cold box 3". The heat exchanger assembly is assembled in an L-shaped arrangement.

Figs. 1-3 only show the exterior structures of the high-pressure heat exchanger cold box, the low-pressure heat exchanger cold box, the subcooler cold box and the thermally isolating casing. Details of pipelines and the interiors of the cold boxes, etc. are not shown.

## Claims

1. Heat exchanger assembly, comprises a first heat exchanger being a high pressure heat exchanger and a second heat exchanger being a low pressure heat exchanger, the first heat exchanger and the second heat exchanger forming a main heat exchanger in a cryogenic air separation plant.and a subcooler; a first heat exchanger cold box, for accommodating the first heat exchanger and heat exchange fluid pipelines, with a first opening being disposed in a side of the first heat exchanger cold box (1, 1', 1"), and a first group of pipelines extending through the first opening;
a second heat exchanger cold box (2, 2', 2"), for accommodating the second heat exchanger and heat exchange fluid pipelines, with a second opening being disposed in a side of the second heat exchanger cold box, and a second group of pipelines extending through the second opening;
a subcooler cold box (3, 3', 3"), for accommodating the subcooler and heat exchange fluid pipelines, with a third opening (4, 4', 4") and a fourth opening (5, 5', 5") each opening being disposed in a side of the subcooler cold box, and a third group of pipelines and a fourth group of pipelines extending through the third opening and the fourth opening respectively,
wherein the first group of pipelines and the third group of pipelines are connected and encapsulated in a first thermally isolating casing, and the second group of pipelines and the fourth group of pipelines are connected and encapsulated in a second thermally isolating casing
**characterised in that** the first and second heat exchangers and the subcooler are all plate fin heat exchangers, the subcooler is a heat exchanger that is separate from the main heat exchanger and formed by one or more heat exchanger units, adapted to use one or more cold-state fluids from a low-pressure column of the air separation plant to cool one or more fluids from a high-pressure column of the air separation plant, and connected to send these cold-state fluids to the main heat exchanger, to cool a hot fluid and the first and second thermally isolating casings are packed with thermally isolating material.

2. Heat exchanger assembly according to Claim 1, **characterized in that** the first heat exchanger cold box (1, 1', 1"), the second heat exchanger cold box (2, 2', 2") and the subcooler cold box (3, 3', 3") are all installed on the ground.

3. Heat exchanger assembly according to Claim 1, **characterized in that** the first group and third group of pipelines, and the second group and fourth group of pipelines, are connected by means of connection components.

4. Heat exchanger assembly according to Claim 3, **characterized in that** the connection components comprise a pipeline and/or a flange.

5. Heat exchanger assembly according to Claim 2, **characterized in that** the third opening (4) and the fourth opening (5) are on two oppositely disposed sides of the subcooler cold box (3).

6. Heat exchanger assembly according to Claim 2, **characterized in that** the third opening (4') and the fourth opening (5') are on the same side of the subcooler cold box (3').

7. Heat exchanger assembly according to Claim 2, **characterized in that** the third opening (4") and the fourth opening (5") are on two adjacently disposed sides of the subcooler cold box (3").

8. Method for assembling the heat exchanger assembly according to any one of Claims 1 - 7, comprising the following steps:
manufacturing the first heat exchanger cold box (1, 1', 1'), the second heat exchanger cold box (2, 2', 2"), and the subcooler cold box (3, 3', 3"), in a workshop, and transporting same to a site, **characterised in that**:
the first group of pipelines and the third group of pipelines are connected at the site, a first sealing panel and a third sealing panel are installed on the first opening and the third opening (4, 4', 4"), and the pipelines and connection components are encapsulated in the first thermally isolating casing (6, 6', 6") by installing the casing outside the pipelines and connection components and packing with a thermally isolating material;
the second group of pipelines and the fourth group of pipelines are connected, a second sealing panel and a fourth sealing panel are installed on the second opening and the fourth opening (5, 5', 5'), and the pipelines and connection components are encapsulated in the second thermally isolating casing (7, 7', 7") by installing the casing outside the pipelines and connection components and packing with a thermally isolating material.

9. Method according to Claim 8, **characterized in that** the thermally isolating casings (6, 6', 6", 7, 7', 7") are connected to the sealing panels by welding.

## Patentansprüche

1. Wärmetauscheranordnung, umfassend einen ersten Wärmetauscher, der ein Hochdruckwärmetauscher ist, und einen zweiten Wärmetauscher, der ein Niederdruckwärmetauscher ist, wobei der erste Wärmetauscher und der zweite Wärmetauscher einen Hauptwärmetauscher in einer Tieftemperatur-Luftzerlegungsanlage und einen Unterkühler ausbilden; eine erste Wärmetauscher-Coldbox zum Aufnehmen des ersten Wärmetauschers und von Wärmetauschfluidleitungen, mit einer ersten Öffnung, die in einer Seite der ersten Wärmetauscher-Coldbox (1, 1', 1") angeordnet ist, und einer ersten Gruppe von Leitungen, die sich durch die erste Öffnung hindurch erstrecken;
eine zweite Wärmetauscher-Coldbox (2, 2', 2") zum Aufnehmen des zweiten Wärmetauschers und von Wärmetauschfluidleitungen, mit einer zweiten Öffnung, die in einer Seite der zweiten Wärmetauscher-Coldbox angeordnet ist, und einer zweiten Gruppe von Leitungen, die sich durch die zweite Öffnung hindurch erstrecken;
eine Unterkühler-Coldbox (3, 3', 3") zum Aufnehmen des Unterkühlers und von Wärmetauschfluidleitungen, mit einer dritten Öffnung (4, 4', 4") und einer vierten Öffnung (5, 5', 5"), wobei jede Öffnung in einer Seite der Unterkühler-Coldbox angeordnet ist, und einer dritten Gruppe von Leitungen und einer vierten Gruppe von Leitungen, die sich entsprechend durch die dritte Öffnung und die vierte Öffnung hindurch erstrecken,
wobei die erste Gruppe von Leitungen und die dritte Gruppe von Leitungen verbunden und in einem ersten thermisch isolierenden Gehäuse eingekapselt sind und die zweite Gruppe von Leitungen und die vierte Gruppe von Leitungen verbunden und in einem zweiten thermisch isolierenden Gehäuse eingekapselt sind,
**dadurch gekennzeichnet, dass** der erste und zweite Wärmetauscher und der Unterkühler alle Lamellenwärmetauscher sind, der Unterkühler ein Wärmetauscher ist, der von dem Hauptwärmetauscher getrennt ist und durch eine oder mehrere Wärmetauschereinheiten ausgebildet ist, die dazu ausgelegt sind, ein oder mehrere im kalten Zustand vorliegende Fluide aus einer Niederdruckkolonne der Luftzerlegungsanlage zum Kühlen eines oder mehrerer Fluide aus einer Hochdruckkolonne der Luftzerlegungsanlage zu nutzen, und so verbunden sind, dass sie diese im kalten Zustand vorliegenden Fluide dem Hauptwärmetauscher zuführen, um ein heißes Fluid zu kühlen, und das erste und zweite thermisch isolierende Gehäuse mit thermisch isolierendem Material ausgestopft sind.

2. Wärmetauscheranordnung nach Anspruch 1, **dadurch gekennzeichnet, dass** die erste Wärmetauscher-Coldbox (1, 1', 1"), die zweite Wärmetauscher-Coldbox (2, 2', 2") und die Unterkühler-Coldbox (3, 3', 3") alle ebenerdig installiert sind.

3. Wärmetauscheranordnung nach Anspruch 1, **dadurch gekennzeichnet, dass** die erste Gruppe und die dritte Gruppe von Leitungen und die zweite Gruppe und die vierte Gruppe von Leitungen mithilfe von Verbindungskomponenten verbunden sind.

4. Wärmetauscheranordnung nach Anspruch 3, **dadurch gekennzeichnet, dass** die Verbindungskomponenten eine Leitung und/oder einen Flansch umfassen.

5. Wärmetauscheranordnung nach Anspruch 2, **dadurch gekennzeichnet, dass** die dritte Öffnung (4) und die vierte Öffnung (5) sich auf zwei einander gegenüber angeordneten Seiten der Unterkühler-Coldbox (3) befinden.

6. Wärmetauscheranordnung nach Anspruch 2, **dadurch gekennzeichnet, dass** die dritte Öffnung (4') und die vierte Öffnung (5') sich auf derselben Seite der Unterkühler-Coldbox (3') befinden.

7. Wärmetauscheranordnung nach Anspruch 2, **dadurch gekennzeichnet, dass** die dritte Öffnung (4") und die vierte Öffnung (5") sich auf zwei benachbart angeordneten Seiten der Unterkühler-Coldbox (3") befinden.

8. Verfahren zur Montage der Wärmetauscheranordnung nach einem der Ansprüche 1 - 7, das folgende Schritte umfasst:
Herstellen der ersten Wärmetauscher-Coldbox (1, 1', 1"), der zweiten Wärmetauscher-Coldbox (2, 2', 2") und der Unterkühler-Coldbox (3, 3', 3") in einer Werkstatt und Transportieren derselben zu einem Aufbauort,
**dadurch gekennzeichnet, dass**:
die erste Gruppe von Leitungen und die dritte Gruppe von Leitungen an dem Aufbauort verbunden werden, eine erste Dichtungsplatte und eine dritte Dichtungsplatte auf der ersten Öffnung und der dritten Öffnung (4, 4', 4") installiert werden und die Leitungen und Verbindungskomponenten in dem ersten thermisch isolierenden Gehäuse (6, 6', 6") eingekapselt werden, indem das Gehäuse außerhalb der Leitungen und Verbindungskomponenten installiert und mit einem thermisch isolierenden Material ausgestopft wird;
die zweite Gruppe von Leitungen und die vierte Gruppe von Leitungen verbunden werden, eine zweite Dichtungsplatte und eine vierte Dichtungsplatte auf der zweiten Öffnung und der vierten Öffnung (5, 5', 5") installiert werden und die Leitungen und Verbindungskomponenten in dem zweiten thermisch isolierenden Gehäuse (7, 7', 7") eingekapselt werden, indem das Gehäuse außerhalb der Leitungen und Verbindungskomponenten installiert und mit einem thermisch isolierenden Material ausgestopft wird.

9. Verfahren nach Anspruch 8, **dadurch gekennzeichnet, dass** die thermisch isolierenden Gehäuse (6, 6', 6", 7, 7', 7") durch Schweißen mit den Dichtungsplatten verbunden werden.

## Revendications

1. Ensemble d'échangeurs de chaleur, comprenant un premier échangeur de chaleur qui est un échangeur de chaleur haute pression et un second échangeur de chaleur qui est un échangeur de chaleur basse pression, le premier échangeur de chaleur et le second échangeur de chaleur formant un échangeur de chaleur principal dans une installation de séparation d'air cryogénique et un sous-refroidisseur ; une première boîte froide d'échangeur de chaleur, destinée à recevoir le premier échangeur de chaleur et des canalisations de fluide d'échange de chaleur, une première ouverture étant disposée dans un côté de la première boîte froide d'échangeur de chaleur (1, 1', 1"), et un premier groupe de canalisations s'étendant à travers la première ouverture ;
une seconde boîte froide d'échangeur de chaleur (2, 2', 2"), destinée à recevoir le second échangeur de chaleur et des canalisations de fluide d'échange de chaleur, une deuxième ouverture étant disposée dans un côté de la seconde boîte froide d'échangeur de chaleur, et un deuxième groupe de canalisations s'étendant à travers la deuxième ouverture ;
une boîte froide de sous-refroidisseur (3, 3', 3"), destinée à recevoir le sous-refroidisseur et des canalisations de fluide d'échange de chaleur, avec une troisième ouverture (4, 4', 4") et une quatrième ouverture (5, 5', 5"), chaque ouverture étant disposée dans un côté de la boîte froide du sous-refroidisseur, et un troisième groupe de canalisations et un quatrième groupe de canalisations s'étendant à travers la troisième ouverture et la quatrième ouverture respectivement,
dans lequel le premier groupe de canalisations et le troisième groupe de canalisations sont raccordés et encapsulés dans une première enveloppe d'isolation thermique, et le deuxième groupe de canalisations et le quatrième groupe de canalisations sont raccordés et encapsulés dans une seconde enveloppe d'isolation thermique,
**caractérisé en ce que** les premier et second échangeurs de chaleur et le sous-refroidisseur sont tous des échangeurs de chaleur à ailettes et plaques, le sous-refroidisseur est un échangeur de chaleur qui est séparé de l'échangeur de chaleur principal et formé par une ou plusieurs unités d'échange de chaleur, conçues pour utiliser un ou plusieurs fluides à l'état froid provenant d'une colonne basse pression de l'installation de séparation d'air pour refroidir un ou plusieurs fluides provenant d'une colonne haute pression de l'installation de séparation d'air, et raccordées pour envoyer ces fluides à l'état froid vers l'échangeur de chaleur principal, pour refroidir un fluide chaud et les première et seconde enveloppes d'isolation thermique sont garnies avec un matériau d'isolation thermique.

2. Ensemble d'échangeurs de chaleur selon la revendication 1, **caractérisé en ce que** la première boîte froide d'échangeur de chaleur (1, 1', 1"), la seconde boîte froide d'échangeur de chaleur (2, 2', 2") et la boîte froide de sous-refroidisseur (3, 3', 3") sont toutes installées sur le sol.

3. Ensemble d'échangeurs de chaleur selon la revendication 1, **caractérisé en ce que** le premier groupe et le troisième groupe de canalisations, et le deuxième groupe et le quatrième groupe de canalisations, sont raccordés au moyen d'éléments de raccordement.

4. Ensemble d'échangeurs de chaleur selon la revendication 3, **caractérisé en ce que** les éléments de raccordement comprennent une canalisation et/ou une bride.

5. Ensemble d'échangeurs de chaleur selon la revendication 2, **caractérisé en ce que** la troisième ouverture (4) et la quatrième ouverture (5) se trouvent sur deux côtés opposés de la boîte froide de sous-refroidisseur (3).

6. Ensemble d'échangeurs de chaleur selon la revendication 2, **caractérisé en ce que** la troisième ouverture (4') et la quatrième ouverture (5') se trouvent sur le même côté de la boîte froide de sous-refroidisseur (3').

7. Ensemble d'échangeurs de chaleur selon la revendication 2, **caractérisé en ce que** la troisième ouverture (4") et la quatrième ouverture (5") se trouvent sur deux côtés disposés de manière adjacente de la boîte froide de sous-refroidisseur (3").

8. Procédé d'assemblage de l'ensemble d'échangeurs de chaleur selon l'une quelconque des revendications 1 à 7, comprenant les étapes suivantes :
la fabrication de la première boîte froide d'échangeur de chaleur (1, 1', 1"), de la seconde boîte froide d'échangeur de chaleur (2, 2', 2") et de la boîte froide de sous-refroidisseur (3, 3', 3"), dans un atelier, et le transport de celles-ci vers un site, **caractérisé en ce que** :
le premier groupe de canalisations et le troisième groupe de canalisations sont raccordés au niveau du site, un premier panneau d'étanchéité et un troisième panneau d'étanchéité sont installés sur la première ouverture et la troisième ouverture (4, 4', 4"), et les canalisations et les éléments de raccordement sont encapsulés dans la première enveloppe d'isolation thermique (6, 6', 6") en installant l'enveloppe à l'extérieur des canalisations et des éléments de raccordement et en la garnissant avec un matériau d'isolation thermique ;
le deuxième groupe de canalisations et le quatrième groupe de canalisations sont raccordés, un deuxième panneau d'étanchéité et un quatrième panneau d'étanchéité sont installés sur la deuxième ouverture et la quatrième ouverture (5, 5', 5"), et les canalisations et les éléments de raccordement sont encapsulés dans la seconde enveloppe d'isolation thermique (7, 7', 7") en installant l'enveloppe à l'extérieur des canalisations et des éléments de raccordement et en la garnissant avec un matériau d'isolation thermique.

9. Procédé selon la revendication 8, **caractérisé en ce que** les enveloppes d'isolation thermique (6, 6', 6", 7, 7', 7") sont raccordées aux panneaux d'étanchéité par soudage.
